# FASCICULE DE BREVET EUROPEEN

(11) **EP 3 521 159 B1**
(45) Date de publication et mention de la délivrance du brevet: **16.09.2020**
(21) Numéro de dépôt: 19155150.6
(22) Date de dépôt: 01.02.2019
(51) Int. Cl.: B64C 25/14, B64C 25/26

(54) **ATTERRISSEUR A CONTREFICHE A LUMIERE**
FAHRWERK MIT LEUCHTSTREBE
LANDING GEAR WITH BRACE WITH LIGHT

(30) Priorité: 02.02.2018 FR 1850904
(43) Date de publication de la demande: 07.08.2019
(73) Titulaire: Safran Landing Systems, 78140 Vélizy-Villacoublay (FR)
(72) Inventeur: MOINE, Daniel, 78140 VELIZY-VILLACOUBLAY (FR); ROLINAT, Hervé, 78140 VELIZY-VILLACOUBLAY (FR)
(74) Mandataire: Lavialle, Bruno François Stéphane

(56) Documents cités:
- EP-A1- 1 988 015
- WO-A1-2010/139756
- FR-A1- 2 928 623

## Description

L'invention concerne un atterrisseur à contrefiche à lumière.

### ARRIERE PLAN DE L'INVENTION

On connaît des atterrisseurs comportant une jambe montée mobile sur la structure d'un aéronef entre une position déployée et une position rétractée. La jambe est stabilisée dans la position déployée par un organe de contreventement verrouillable lorsque la jambe arrive dans ladite position, mais qui peut être déverrouillée pour permettre la rétraction de la jambe jusqu'à la position rétractée.

Différents types de contrefiche sont connus, parmi lesquels la contrefiche briseuse comprenant deux éléments articulés qui sont maintenus en position alignée par un organe de stabilisation formant verrou (lui-même comportant souvent deux bras confirmés en position alignée par un organe ressort), ou encore la contrefiche télescopique équipée d'un organe de blocage interne formant verrou. Le verrouillage est généralement automatique quand la jambe arrive en position déployée et est confirmé par un organe ressort.

Un tel atterrisseur nécessite un actionneur de déverrouillage pour neutraliser le verrou de la contrefiche, et un actionneur de manœuvre pour ramener la jambe vers la position rétractée. On connaît également des agencements de l'actionneur de manoeuvre lui permettant d'assurer à la fois la neutralisation de l'organe de verrouillage et la remontée de la jambe vers la position rétractée, ce qui permet de supprimer l'actionneur de déverrouillage. Dans le cas d'une contrefiche briseuse, un tel agencement conduit à atteler l'actionneur de manœuvre à l'un des bras de l'organe de stabilisation, ce qui conduit à des solutions cinématiquement complexes. WO 2010/139756 A1 décrit un atterrisseur d'aéronef selon le préambule de la revendication 1.

### OBJET DE L'INVENTION

L'invention vise à proposer un atterrisseur d'aéronef à contreventement simplifié.

### PRESENTATION DE L'INVENTION

En vue de la réalisation de ce but, on propose un atterrisseur d'aéronef comportant une jambe portant au moins une roue et destinée à être montée mobile sur une structure d'aéronef entre une position déployée et une position rétractée, l'atterrisseur comportant un organe de contreventement adapté à être disposé entre la structure de l'aéronef et la jambe pour stabiliser celle-ci en position déployée, et un actionneur de manœuvre pour déplacer la jambe de la position déployée à la position rétractée. Selon l'invention, l'organe de contreventement comporte un bras ayant une extrémité proximale destinée à être articulée sur la structure de l'aéronef, le bras présentant une lumière longitudinale s'étendant jusqu'à une extrémité distale pour se terminer par un renvoi et dans laquelle est engagé à coulissement un doigt solidaire de la jambe, l'actionneur de manoeuvre étant attelé audit bras de contrefiche.

Ainsi, la stabilisation de la jambe dans la position déployée est assurée par l'engagement du doigt de la jambe dans le renvoi de la lumière du bras de l'organe de contreventement. L'action de l'actionneur de manœuvre sur le bras de l'organe de contreventement provoque tout d'abord la sortie du doigt du renvoi déverrouillant ainsi la jambe, puis la remontée de la jambe par coulissement du doigt dans la lumière.

### DESCRIPTION DES FIGURES

L'invention sera mieux comprise à la lumière de la description qui suit d'un mode particulier de réalisation de l'invention, en référence aux figures des dessins annexés, parmi lesquelles :
- La figure 1 est une vue en perspective d'un atterrisseur d'aéronef selon l'invention, représenté en position déployée ;

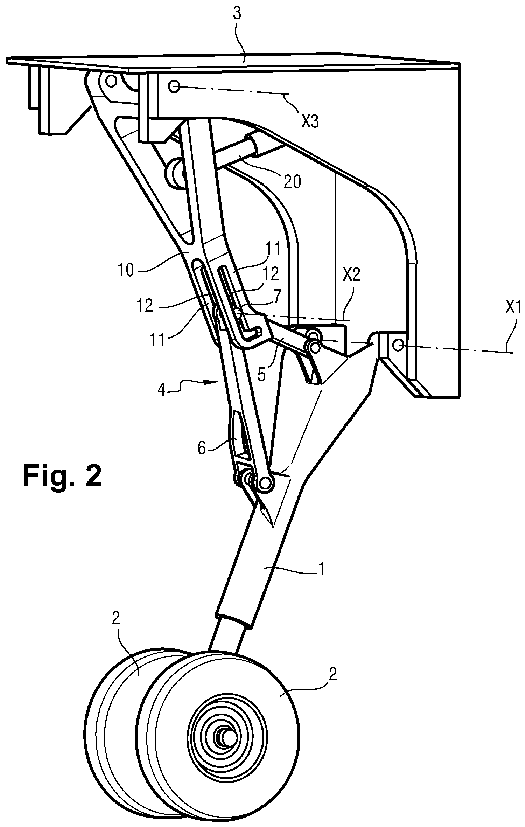

- La figure 2 est une vue en perspective de l'atterrisseur de la figure 1, représenté en cours de relevage vers la position rétractée ;
- La figure 3 est une vue en perspective de l'atterrisseur de la figure 1, représenté en position rétractée ;
- Les figures 4A à 4E sont des vues schématiques partielles du bras de contrefiche et d'une partie de la jambe de l'atterrisseur lors d'une phase de relevage.

### DESCRIPTION DETAILLEE DE L'INVENTION

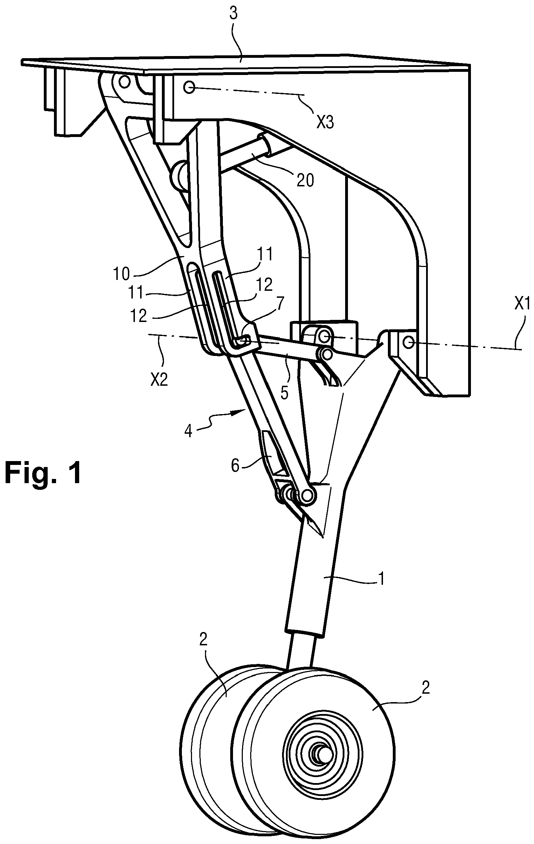

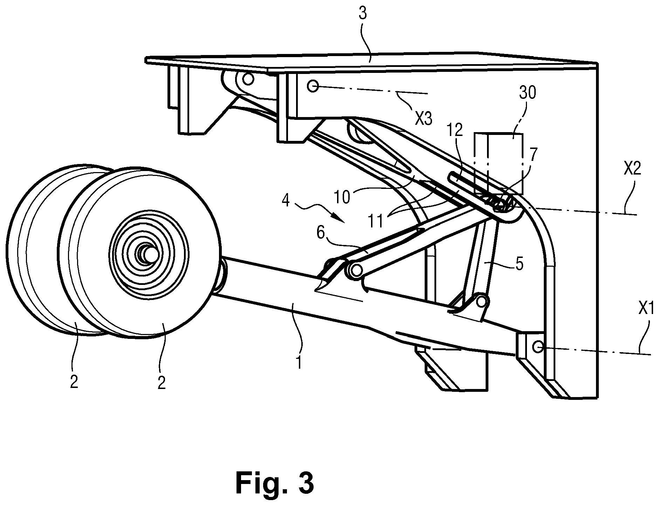

La figure 1 illustre un atterrisseur d'aéronef comportant une jambe 1 portant des roues 2 à sa partie basse et articulée en partie haute sur une structure 3 de l'aéronef selon un axe d'articulation X1. La jambe est mobile en rotation autour dudit axe d'articulation entre une position déployée illustrée à la figure 1 et une position rétractée illustrée à la figure 3. La jambe 1 comporte une structure 4 faite de deux supports 5 et 6 rapportés sur la jambe 1 pour former une pyramide qui porte à son apex un doigt 7 s'étendant selon un axe X2 parallèle à l'axe d'articulation X1.

L'atterrisseur comporte par ailleurs un bras de contrefiche 10 ayant une extrémité proximale articulée sur la structure de l'aéronef selon un axe d'articulation X3 parallèle à l'axe d'articulation X1, et dont la partie distale est évidée en son centre pour laisser subsister deux flancs parallèles 11 s'étendant sensiblement selon un plan normal à l'axe d'articulation X3 et comportant chacun une lumière longitudinale 12 orientée sensiblement selon une direction concourante avec l'axe d'articulation X3. Chaque lumière est terminée par un renvoi 13 s'étendant sensiblement perpendiculaire au reste de la lumière 12. L'apex de la structure 4 de la jambe 1 s'étend entre les flancs parallèles 11 et le doigt 7 est engagé dans les lumières 12. Ainsi, le bras de contrefiche 10 et la jambe 1 sont cinématiquement reliées par une liaison de coulissement du doigt 7 dans les lumières 12. Les rotations respectives du bras de contrefiche 10 et de la jambe 1 sont donc liées. Enfin, un actionneur de manœuvre 20, ici un vérin, est attelé au bras de contrefiche 10.

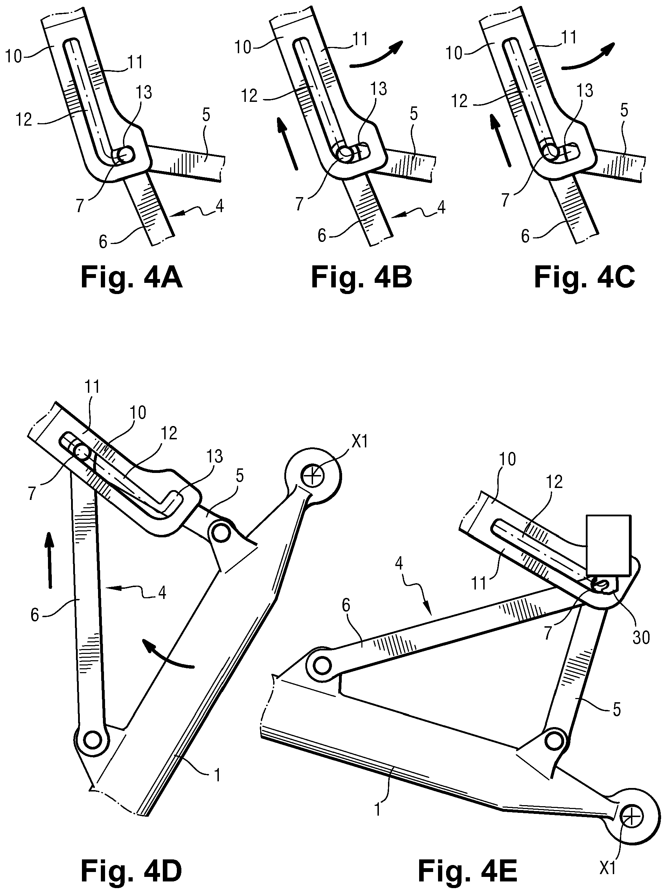

Le relevage de l'atterrisseur est maintenant expliqué en référence aux figures 4A à 4E. Dans la position déployée illustrée à la figure 4A (également à la figure 1), il est visible que le doigt 7 est maintenu engagé au fond du renvoi 13, empêchant ainsi la jambe 1 de pivoter autour de l'axe d'articulation X1, ce qui a donc pour effet de contreventer et donc stabiliser la jambe 1 en position déployée. Ce maintien du doigt 7 au fond du renvoi 13 assure le verrouillage de la jambe 1 en position déployée et peut être assuré par l'actionneur de manœuvre 20 qui reste activé pour confirmer le doigt 7 au fond du renvoi 13, ou par tout organe ressort agissant sur le bras de contrefiche 10 pour maintenir celui-ci dans la position illustré à la figure 4A. Pour relever la jambe 1, et comme cela est illustré à la figure 4B, on active l'actionneur de manœuvre 20 pour tirer sur le bras de contrefiche 10 et le faire pivoter (dans le sens de la flèche), ce qui a pour premier effet de faire sortir le doigt 7 du renvoi 13. La jambe 1 est alors déverrouillée et peut pivoter autour de son axe d'articulation X1. Continuant la rotation du bras de contrefiche 10 sous l'action de l'actionneur de manœuvre 20, le doigt 7 s'engage dans les lumières 12 comme illustré à la figure 4C, entamant ainsi le relevage de la jambe 1 vers sa position rétractée. Puis le doigt 7 coulisse dans les lumières 12 jusqu'à une excursion maximale illustrée à la figure 4D qui intervient quand les lumières 12 convergent vers l'axe d'articulation X1 de la jambe 1. La rotation du bras de contrefiche 10 continuant, la jambe 1 continue sa course vers la position rétractée, mais le doigt 7 repart maintenant en direction du renvoi 13, jusqu'à ce que l'une des extrémités du doigt 7 saillant de l'une des lumières 12 soit crochetée par un crochet de verrouillage 30 solidaire de la structure de l'aéronef. La jambe 1 est alors immobilisée en position rétractée. Le doigt assure dès lors une double fonction de liaison en coulissement avec le bras de contrefiche et d'organe d'accrochage pour le verrouillage de la jambe en position rétractée.

Pour la descente de la jambe 1 vers la position déployée, il suffit de commander le crochet 30 pour qu'il lâche le doigt 7. La jambe 1 descend alors sous l'effet de son propre poids et des efforts aérodynamiques, l'actionneur de relevage 20 pouvant être utilisé pour réguler la vitesse de descente de la jambe 1. La jambe descend d'elle-même jusqu'à la position déployée dans laquelle le doigt 7 s'engage automatiquement au fond du renvoi 13. La jambe est alors verrouillée en position déployée. Un organe ressort (non représenté ici) agit sur le bras de contrefiche 10 de sorte que le doigt 7 reste engagé dans le fond du renvoi 13, ce qui a pour effet de confirmer le verrouillage de la jambe 1 en position déployée.

L'invention n'est pas limitée à ce qui vient d'être décrit mais englobe au contraire toute variante entrant dans le cadre défini par les revendications. En particulier, on a figuré ici un atterrisseur dont la jambe et l'organe de contreventement sont articulés sur la structure de l'aéronef selon des axes d'articulation parallèles. De façon plus générale, l'invention s'applique à un atterrisseur dont la jambe est mobile entre une position déployée et une position rétractée, et dont l'organe de contreventement est lié dans son mouvement à celui de la jambe par coulissement d'un doigt de la jambe dans une lumière de l'organe de contreventement. En outre, bien qu'ici les lumières soient portées par des flancs parallèles de sorte que la structure porteuse du doigt s'étend entre les flancs d'autres formes connues de liaison lumière/doigt pourront être utilisées, comme par exemple une lumière centrale s'étendant entre deux supports de la jambe portant le doigt. Celui-ci pourra être éventuellement fractionné en deux parties.

Bien qu'ici la lumière soit essentiellement rectiligne, la lumière pourra prendre d'autres configurations pour faciliter la remontée de la jambe. Il importe cependant que la lumière soit terminée par un renvoi à même de procurer un verrouillage de la jambe au moins en position déployée.

Bien qu'ici le doigt serve également au verrouillage de la jambe en position rétractée, ce verrouillage pourra être assuré par d'autres moyens, par exemple par une olive d'accrochage solidaire de la jambe ou du bras de contrefiche qui est crochetée par un crochet lors que la jambe arrive en position rétractée.

Enfin bien qu'ici l'actionneur de manœuvre illustré soit un vérin linéaire attelé à l'organe de contreventement, on pourra utiliser tout autre type d'actionneur de manœuvre, comme un actionneur électromécanique rotatif disposé sur l'articulation de l'organe de contreventement.

## Revendications

1. Atterrisseur d'aéronef comportant une jambe (1) portant au moins une roue (2) et destinée à être montée mobile sur une structure d'aéronef entre une position déployée et une position rétractée, l'atterrisseur comportant un organe de contreventement (10) adapté à être disposé entre la structure de l'aéronef et la jambe pour stabiliser celle-ci en position déployée, et un actionneur de manœuvre (20) pour déplacer la jambe de la position déployée à la position rétractée, tel que l'organe de contreventement comporte un bras de contrefiche (10) ayant une extrémité proximale destinée à être articulée sur la structure de l'aéronef, **caractérisé en ce que** le bras présente une lumière longitudinale (12) s'étendant jusqu'à une extrémité distale pour se terminer par un renvoi (13) et dans laquelle est engagé à coulissement un doigt (7) solidaire de la jambe, l'actionneur de manoeuvre étant attelé audit bras de contrefiche.

2. Atterrisseur d'aéronef selon la revendication 1, dans lequel la jambe (1) et le bras de contrefiche (10) sont adaptés à être articulés sur la structure de l'aéronef selon des axes d'articulation parallèles (X1,X3).

3. Atterrisseur selon la revendication 1, dans lequel le doigt (7) forme un organe d'accrochage pour un crochet maintenant la jambe dans la position rétractée.

## Patentansprüche

1. Luftfahrzeugfahrwerk, umfassend ein Bein (1), das mindestens ein Rad (2) trägt und dazu bestimmt ist, an einer Luftfahrzeugstruktur beweglich zwischen einer ausgefahrenen Position und einer eingezogenen Position gelagert zu werden, wobei das Fahrwerk ein Aussteifungsorgan (10) umfasst, das dazu geeignet ist, zwischen der Struktur des Luftfahrzeugs und dem Bein angeordnet zu werden, um dieses in der ausgefahrenen Position zu stabilisieren, und einen Betätigungsaktor (20), um das Bein von der ausgefahrenen Position in die eingezogene Position zu bewegen, wobei das Aussteifungsorgan einen Verstrebungsarm (10) umfasst, der ein proximales Ende hat, das dazu bestimmt ist, an der Struktur des Luftfahrzeugs angelenkt zu werden, **dadurch gekennzeichnet, dass** der Arm einen Längsschlitz (12) aufweist, der sich bis zu einem distalen Ende erstreckt, um in einer Umlenkung (13) zu enden, und in den ein fest mit dem Bein verbundener Finger (7) gleitend eingreift, wobei der Betätigungsaktor an den genannten Verstrebungsarm gekoppelt ist.

2. Luftfahrzeugfahrwerk nach Anspruch 1, bei dem das Bein (1) und der Verstrebungsarm (10) dazu geeignet sind, an der Struktur des Luftfahrzeugs um parallele Gelenkverbindungsachsen (X1, X3) angelenkt zu werden.

3. Fahrwerk nach Anspruch 1, bei dem der Finger (7) ein Befestigungsorgan für einen Haken bildet, der das Bein in der eingezogenen Position hält.

## Claims

1. An aircraft undercarriage comprising a leg (1) carrying at least one wheel (2) and for mounting to move on an aircraft structure between a deployed position and a retracted position, the undercarriage including a brace member (10) arranged between the structure of the aircraft and the leg in order to stabilize the leg in the deployed position, and a drive actuator (20) for moving the leg from the deployed position to the retracted position, the undercarriage being **characterized in that** the brace member comprises a strut arm (10) having a proximal end that is designed to be hinged on the structure of the aircraft, the arm presenting a longitudinal slot (12) extending until it reaches a distal end in order to terminate in a bend (13) and having slidably engaged therein a finger (7) that is secured to the leg, the drive actuator being coupled to said strut arm.

2. An undercarriage according to claim 1, wherein the leg (1) and the strut arm (10) are hinged on the structure of the aircraft about parallel hinge axes (X1,X3).

3. An undercarriage according to claim 1, wherein the finger (7) forms an attachment member for a hook holding the leg in the retracted position.
